# EUROPEAN PATENT APPLICATION

(11) **EP 4 583 182 A1**
(43) Date of publication of application: **09.07.2025**
(21) Application number: 23876540.8
(22) Date of filing: 27.09.2023
(51) Int. Cl.: H01M 4/13, H01M 50/531, H01M 50/59, H01M 50/586, H01M 10/058, H01M 10/0525

(54) **POLE PIECE, ELECTROCHEMICAL DEVICE, AND ELECTRONIC DEVICE**

(30) Priority: 13.10.2022 CN 202211252684
(71) Applicant: Ningde Amperex Technology Limited, Ningde, Fujian 352100 (CN)
(72) Inventor: LIU, Fang, Ningde, Fujian 352100 (CN); WU, Hua, Ningde, Fujian 352100 (CN)
(74) Representative: Icosa
(86) International application number: PCT/CN2023/121953
(87) International publication number: WO 2024/078336

(57) **Abstract**

Some embodiments of this application relate to the field of battery technologies, and in particular, disclose an electrode plate, an electrochemical apparatus, and an electronic device. The electrode plate includes a current collector, an active substance layer, a tab, and a first insulation adhesive layer. The active substance layer is disposed on surface of the current collector, and the active substance layer is provided with a first groove and a second groove running through the bottom of the first groove to the current collector. The current collector is partially exposed within the second groove. The tab is accommodated in the first groove and the second groove and connected to the current collector. The first insulation adhesive layer is disposed on a side of the first groove facing away from the current collector, and projections of the first insulation adhesive layer and the tab along a thickness direction of the current collector are located within the first groove of the active substance layer. In this way, some embodiments of this application can reduce influence of the first insulation adhesive layer on overall thickness of the electrode plate, improve the thickness consistency of a battery cell, and enhance fast charging and cycling performance of the battery cell.

## Description

### CROSS-REFERENCE TO RELATED APPLICATIONS

This application claims priority to Chinese Patent Application No. 202211252684.5, filed with the China National Intellectual Property Administration on October 13, 2022 and entitled "ELECTRODE PLATE, ELECTROCHEMICAL APPARATUS, AND ELECTRONIC DEVICE", which is incorporated herein by reference in its entirety.

### TECHNICAL FIELD

Some embodiments of this application relate to the field of battery technologies, and in particular, to an electrode plate, an electrochemical apparatus, and an electronic device.

### BACKGROUND

Currently, with continuous advancement of science and technology, the application of lithium-ion batteries has rapidly expanded from initial portable mobile devices such as mobile phones and cameras to large-scale electric devices requiring high power and energy such as electric bicycles and electric vehicles. Therefore, requirements for design and manufacturing process of lithium-ion batteries are becoming increasingly high. In lithium-ion batteries, a tab adhesive is commonly used, and its main function is to bond to tabs of an electrode plate to prevent the welding burrs on the tabs from puncturing a separator of a battery cell during processes such as winding and stacking of the electrode plates.

During realization of this application, the inventors of some embodiments of this application have found that: the tab adhesive adheres to the surface of the electrode plate, which leads to an increase in overall thickness of the electrode plate and thickness of the battery cell formed by winding or stacking the positive and negative electrode plates, adversely affecting the cell energy density, fast charging capability, and cycling performance of lithium-ion batteries.

### SUMMARY

In view of the foregoing problems, some embodiments of this application provide an electrode plate, an electrochemical apparatus, and an electronic device, which solves the above-mentioned problem: the tab adhesive adheres to the surface of the electrode plate, which leads to an increase in the overall thickness of the electrode plate and the thickness of the battery cell formed by winding or stacking the positive and negative electrode plates, thereby affecting the cell energy density of lithium-ion batteries.

According to an aspect of some embodiments of this application, an electrode plate is provided. The electrode plate includes a current collector, an active substance layer, a tab, and a first insulation adhesive layer. The active substance layer is disposed on surface of the current collector, and the active substance layer is provided with a first groove and a second groove running through the bottom of the first groove to the current collector. The current collector is partially exposed within the second groove. The tab is accommodated in the first groove and the second groove, where the tab is connected to the current collector. The first insulation adhesive layer is disposed in the first groove. Projections of the first insulation adhesive layer and the tab along a first direction are located within the first groove of the active substance layer. The first direction is a thickness direction of the electrode plate. With this arrangement, the first insulation adhesive layer is disposed within the first groove, and the first groove is used for accommodating the first insulation adhesive layer, so that the direct adhesion of the first insulation adhesive layer to the surface of the electrode plate is reduced, thereby reducing the influence on the overall thickness of the electrode plate.

In an optional implementation, the current collector includes a first surface and a second surface disposed opposite each other. The active substance layer includes a first active substance layer and a second active substance layer, where the first active substance layer is disposed on the first surface, the second active substance layer is disposed on the second surface, and the first groove is located on the first active substance layer.

In an optional implementation, depth of the first groove along the first direction is T1, thickness of the first insulation adhesive layer along the first direction is T2, thickness of the first active substance layer along the first direction is T3, and T2 ≤ T1 < T3, where the first direction is perpendicular to the bottom of the first groove. With such arrangement, the first insulation adhesive layer does not extend beyond an edge of the opening of the first groove along the first direction, reducing the protrusion of the first insulation adhesive layer from the surface of the electrode plate, thereby reducing its influence on the thickness of the electrode plate.

In an optional implementation, at least one of the following conditions is satisfied: width of the second groove along the second direction is W1, width of the first insulation adhesive layer along the second direction is W2, and W1 ≤ W2; or width of the first groove along the second direction is W3, and W2 ≤ W3, where the second direction is perpendicular to the first direction. With this arrangement, during the winding or stacking process of the electrode plate, the first insulation adhesive layer remains within the first groove along the second direction, reducing the protrusion of the first insulation adhesive layer from the surface of the electrode plate.

In an optional implementation, when viewed along the first direction, the bottom of the first groove is separated by the second groove to form a discontinuous first zone and second zone, where the first zone and the second zone are disposed opposite each other, where one end of the first insulation adhesive layer is located in the first zone, and another end is located in the second zone; or when viewed along the first direction, the bottom of the first groove is separated by the second groove to form a third zone, where the third zone is U-shaped.

In an optional implementation, the second active substance layer is provided with a third groove and a fourth groove running through the bottom of the third groove to the current collector, where the current collector is partially exposed within the fourth groove, projections of the fourth groove and the second groove along the first direction overlap, and the current collector bends towards the fourth groove to form a bending portion, where the tab is connected to the bending portion; and the electrode plate further includes a second insulation adhesive layer, where the second insulation adhesive layer is disposed on a side within the third groove and facing away from the current collector. The third groove is used for accommodating the second insulation adhesive layer, so that the direct adhesion of the second insulation adhesive layer to another surface of the electrode plate is reduced, thereby reducing the influence on the overall thickness of the electrode plate.

In an optional implementation, depth of the third groove along the first direction is T4, thickness of the second insulation adhesive layer along the first direction is T5, thickness of the second active substance layer along the first direction is T6, and T5 ≤ T4 < T6. With such arrangement, the second insulation adhesive layer does not extend beyond an edge of the opening of the third groove along the first direction, reducing the protrusion of the second insulation adhesive layer from the surface of the electrode plate, thereby reducing its influence on the thickness of the electrode plate.

In an optional implementation, at least one of the following conditions is satisfied: width of the fourth groove along the second direction is W4, width of the second insulation adhesive layer along the second direction is W5, and W4 ≤ W5; or width of the third groove along the second direction is W6, and W5 ≤ W6, where the second direction is perpendicular to the first direction. With this arrangement, during the winding or stacking process of the electrode plate, the second insulation adhesive layer remains within the third groove along the second direction, reducing the protrusion of the second insulation adhesive layer from the surface of the electrode plate, thereby reducing its influence on the thickness of the electrode plate.

In an optional implementation, there is a non-overlapping portion between projections of the second groove and the fourth groove in the first direction. With such arrangement, during processes such as pressing on the electrode plate, the non-overlapping portion between the second groove and the fourth groove in the first direction provides some displacement space for the active substance layer, reducing the influence of the active substance layer on the thickness of the battery cell.

According to another aspect of some embodiments of this application, an electrochemical apparatus is provided. The electrochemical apparatus includes a separator and a first electrode plate and a second electrode plate disposed on two sides of the separator and having opposite polarities. The first electrode plate is the foregoing electrode plate.

In an optional implementation, the second electrode plate is provided with a third insulation adhesive layer. The third insulation adhesive layer is disposed on a side of the active substance layer of the second electrode plate facing away from the current collector. The first electrode plate has two extended first step portions within the first groove, where the two first step portions are spaced apart, the first insulation adhesive layer is located between the two first step portions, and the first step portion is provided with a first step surface, where during the winding or stacking of the first electrode plate and the second electrode plate, a side of the third insulation adhesive layer facing away from the active substance layer abuts against the separator until the separator abuts against the first step surface, and the third insulation adhesive layer is at least partially located within the first groove, thereby reducing the influence of the third insulation adhesive layer on the thickness of the battery cell.

In an optional implementation, at least one of the following conditions is satisfied: thickness of the first step portions along the first direction is T7, thickness of the first insulation adhesive layer along the first direction is T2, and T2 ≤ T7; a distance from the first step surface to the opening of the first groove is T8, thickness of the third insulation adhesive layer along the first direction is T9, and T9 ≤ T8; or a spacing between the two first step portions is W7, width of the first insulation adhesive layer along the second direction is W2, and W2 ≤ W7.

In an optional implementation, the second electrode plate is provided with a fourth insulation adhesive layer. The fourth insulation adhesive layer is disposed on a side of the active substance layer of the second electrode plate facing away from the current collector. The first electrode plate has two extended second step portions within the third groove, where the two second step portions are spaced apart, the second insulation adhesive layer is located between the two second step portions, and the second step portion is provided with a second step surface, where during the winding or stacking of the first electrode plate and the second electrode plate, a side of the fourth insulation adhesive layer facing away from the active substance layer on the second electrode plate abuts against the separator until the separator abuts against the second step surface, and the fourth insulation adhesive layer is at least partially located within the third groove, thereby reducing the influence of the fourth insulation adhesive layer on the thickness of the battery cell.

In an optional implementation, at least one of the following conditions is satisfied: thickness of the second step portions along the first direction is T10, thickness of the second insulation adhesive layer along the first direction is T5, and T5 ≤ T10; a distance from the second step surface to the opening of the third groove is T11, thickness of the fourth insulation adhesive layer along the first direction is T12, and T12 ≤ T11; or a spacing between the two second step portions is W8, width of the second insulation adhesive layer along the second direction is W5, and W5 ≤ W8.

According to another aspect of some embodiments of this application, an electronic device is provided, where the electronic device includes the foregoing electrochemical apparatus.

The beneficial effects of some embodiments of this application are as follows: Different from the prior art, some embodiments of this application provide a current collector, an active substance layer, a tab, and a first insulation adhesive layer. The active substance layer is disposed on the surface of the current collector, and the active substance layer is provided with a first groove and a second groove running through the bottom of the first groove to the current collector. The current collector is partially exposed within the second groove. The tab is accommodated in the first groove and the second groove, where the tab is connected to the current collector. In addition, the first insulation adhesive layer is disposed on a side of the first groove facing away from the current collector. The projections of the first insulation adhesive layer and the tab along the thickness direction of the current collector are located within the first groove of the active substance layer. With such arrangement, the first insulation adhesive layer is adhered to the tab, which can prevent welding burrs on the tab from puncturing the separator of the battery cell. In addition, the first insulation adhesive layer is disposed within the first groove. The first groove is used to accommodate the first insulation adhesive layer, so that the direct adhesion of the first insulation adhesive layer to the surface of the electrode plate is reduced, so as to minimize its influence on the overall thickness of the electrode plate. Further, this reduces the influence of the first insulation adhesive layer on the thickness of the battery cell formed by winding or stacking the positive and negative electrode plates, improves the energy density of the battery cell, and enhances the thickness consistency of the battery cell, as well as the fast charging and cycling performance of the battery cell.

### BRIEF DESCRIPTION OF DRAWINGS

In order to further illustrate specific embodiments of this application or technical solutions in the prior art, the accompanying drawings used in the description of specific embodiments or the prior art are briefly introduced below. In all the drawings, similar elements or portions are generally indicated by similar reference numerals. Proportions of the elements or parts in the drawings may not be drawn to scale.
FIG. 1 is a schematic diagram of an overall structure of an electrode plate according to an embodiment of this application, showing a top view;
FIG. 2 is a sectional side view of an overall structure of an electrode plate according to an embodiment of this application;
FIG. 3 is an enlarged schematic diagram of a structure at A in FIG. 2;
FIG. 4 is another annotated schematic diagram of a structure at A in FIG. 2;
FIG. 5 is another annotated schematic diagram of an overall structure of an electrode plate according to an embodiment of this application;
FIG. 6 is a schematic diagram of an overall structure of another embodiment of an electrode plate according to this application;
FIG. 7 is a schematic diagram of an overall structure of still another embodiment of an electrode plate according to this application;
FIG. 8 is a schematic diagram of a state of an electrode plate according to an embodiment of this application;
FIG. 9 is a schematic diagram of another state of an electrode plate according to an embodiment shown in FIG. 8;
FIG. 10 is an exploded schematic diagram of an overall structure of an electrochemical apparatus according to an embodiment of this application;
FIG. 11 is a sectional side view of some components of an electrode assembly of an electrochemical apparatus according to an embodiment of this application; and
FIG. 12 is an enlarged schematic diagram of a structure at B in FIG. 11.

### DESCRIPTION OF EMBODIMENTS

For ease of understanding this application, the following further describes this application in detail with reference to the accompanying drawings and specific embodiments. It should be noted that when an element is "fixed to" another element, the element may be directly on the another element, or there may be one or more elements between the elements. When an element is "connected to" another element, the element may be directly connected to the another element, or there may be one or more elements between the elements. Terms such as "vertical", "horizontal", "left", "right", and similar expressions used in this specification are for illustration only.

Unless otherwise defined, all technical and scientific terms used herein shall have the same meanings as commonly understood by those skilled in the art to which this application belongs. The terms used in the specification of this application are merely intended to describe specific embodiments but not to constitute any limitations on this application. The term "and/or" used in this specification includes any and all combinations of one or more relevant listed items.

In addition, technical features involved in different embodiments of this application that are described below may be combined as long as they do not conflict with each other.

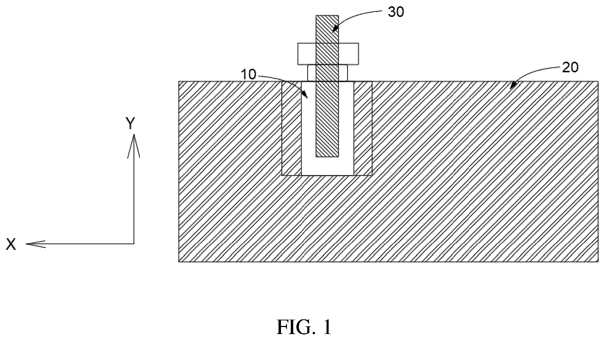

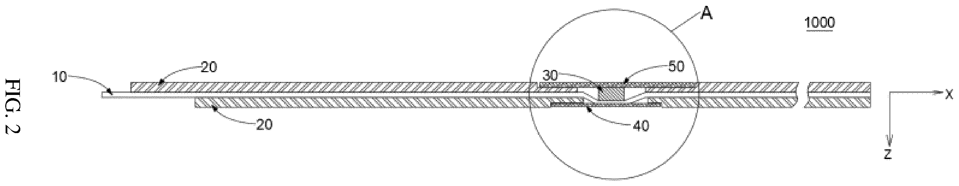

As an important component of an electrode assembly 102, an electrode plate 1000 typically needs to be stacked or wound. In order to facilitate stacking or winding, the electrode plate 1000 may be configured in a strip shape, and the electrode plate 1000 has a length direction, a width direction, and a thickness direction. During winding, the electrode plate 1000 is typically wound along a length direction of the electrode plate 1000. As shown in FIG. 1 and FIG. 2, the length direction of the electrode plate 1000 is direction X in FIG. 1 and FIG. 2, the width direction is direction Y in FIG. 1, and the thickness direction is direction Z in FIG. 2. The direction X, direction Y, and direction Z are perpendicular to each other.

Referring to FIG. 1 and FIG. 2, the electrode plate 1000 includes a current collector 10, an active substance layer 20, a tab 30, a first insulation adhesive layer 40, and a second insulation adhesive layer 50. The active substance layer 20 is disposed on surface of the current collector 10, the tab 30 is connected to the current collector 10, and the first insulation adhesive layer 40 and the second insulation adhesive layer 50 are both disposed on a side of the active substance layer 20 facing away from the current collector 10.

As for the current collector 10 and the tab 30, as shown in FIG. 1, the current collector 10 is a conductive substrate of the electrode plate 1000, and one end of the tab 30 is connected to the current collector 10, and another end of the tab 30 extends in the Y direction. The electrode plate 1000 typically includes a positive electrode plate and a negative electrode plate. Depending on a type of electrode plate 1000, different materials can be chosen as the current collector 10 of the electrode plate 1000. For example, aluminum foil can be used as the current collector 10 for a positive electrode plate, and copper foil can be chosen as the current collector 10 for a negative electrode plate. A material of the tab 30 can vary depending on a type of electrode plate, and the tab 30 may be made of metal such as copper, nickel, or aluminum. In some embodiments, the current collector 10 includes a first surface and a second surface disposed opposite each other, and the first surface and the second surface may be coated with the active substance layer 20.

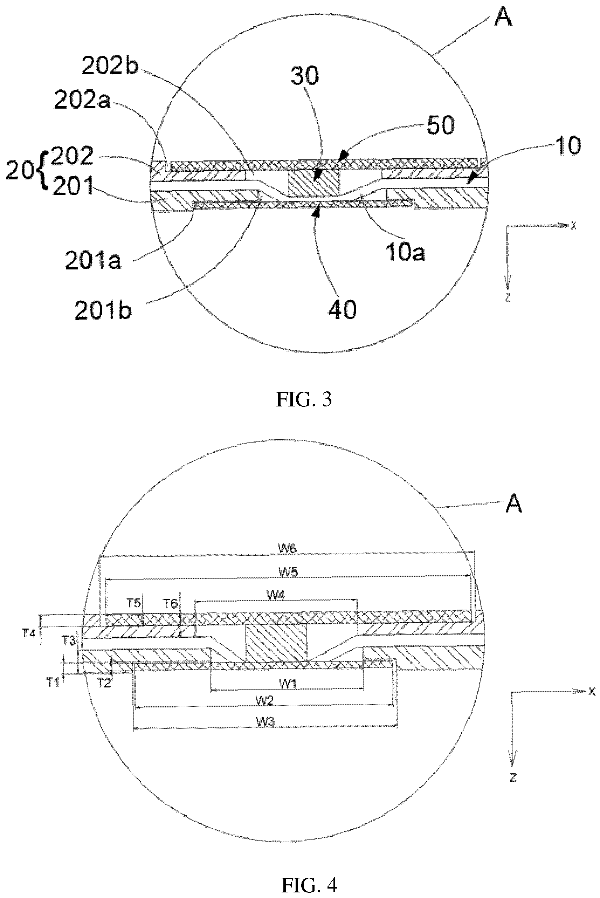

As for the active substance layer 20, as shown in FIG. 2 and FIG. 3, the active substance layer 20 may be disposed on at least one surface of the current collector 10. Since the current collector 10 is the conductive substrate of the electrode plate 1000 and typically is in a strip shape, the active substance layer 20 is typically applied on the first surface or the second surface of the electrode plate 1000, or the active substance layer 20 is applied on both the first surface and the second surface of the electrode plate 1000. In some embodiments, the active substance layer 20 includes a first active substance layer 201 and a second active substance layer 202, where the first active substance layer 201 is disposed on the first surface, and the second active substance layer 202 is disposed on the second surface.

The active substance layer 20 typically includes active materials, conductive agents, dispersing agents, additives, binders, and the like. Depending on the type of electrode plates 1000, different active materials can be chosen for the active substance layer 20. For the positive electrode plate, common positive active materials can be chosen for the active substance layer 20, such as lithium cobalt oxide, lithium-rich manganese base, lithium iron phosphate, lithium manganese iron phosphate, nickel cobalt manganese ternary, lithium manganate, polyanionic compound, and Prussian blue, and one or more of the foregoing positive active materials can be chosen for the active substance layer 20 of the positive electrode plate. For the negative electrode plate, common negative active materials can be chosen for the active substance layer 20, such as hard carbon, soft carbon, graphite, lithium metal, silicon carbon silicon oxide, and lithium titanate, and one or more of the foregoing negative active materials can be chosen for the active substance layer 20 of the negative electrode plate.

In some embodiments, the active substance layer 20 is provided with a first groove 201a and a second groove 201b running through the bottom of the first groove 201a to the current collector 10. The current collector 10 is partially exposed within the second groove 201b, and the first insulation adhesive layer 40 is disposed on a side of the first groove 201a facing away from the current collector 10. Projections of the first insulation adhesive layer 40 and the tab 30 along the thickness direction of the current collector 10 (that is, along direction Z) are located within the first groove 201a of the active substance layer 20. The first groove 201a is used to accommodate the first insulation adhesive layer 40, so that the direct adhesion of the first insulation adhesive layer 40 to the surface of the electrode plate is reduced, thereby reducing its influence on the thickness of the electrode plate. Optionally, the first groove 201a and the second groove 201b are located on the first active substance layer 201.

In some embodiments, referring to FIG. 4, depth of the first groove 201a along a first direction (that is, direction Z) is T1, thickness of the first insulation adhesive layer 40 along the first direction is T2, thickness of the first active substance layer 201 along the first direction is T3, and T2 ≤ T1 < T3. With such arrangement, the first insulation adhesive layer 40 does not extend beyond an edge of the opening of the first groove 201a along direction Z, reducing the protrusion of the first insulation adhesive layer 40 from the surface of the electrode plate, so as to reduce its influence on the thickness of the electrode plate. The first direction is a direction perpendicular to the bottom of the first groove 201a. It should be noted that the specific values of T1, T2, and T3 in this embodiment are not specifically limited, and the specific values of T1, T2, and T3 can be set based on an actual need, as long as the relationship between T1, T2, and T3 satisfies the foregoing conditions.

In some embodiments, width of the second groove 201b along a second direction (that is, along direction X) is W1, width of the first insulation adhesive layer 40 along the second direction is W2, width of the first groove 201a along the second direction is W3, and W1 ≤ W2 ≤ W3. With such arrangement, during winding or stacking of the electrode plates, the first insulation adhesive layer 40 is located within the first groove 201a along direction X, reducing the protrusion of the first insulation adhesive layer 40 from the surface of the electrode plate, thereby reducing its influence on the thickness of the electrode plate. It should be noted that the specific values of W1, W2, and W3 in this embodiment are not specifically limited, and the specific values of W1, W2, and W3 can be set based on an actual need, as long as the relationship between W1, W2, and W3 satisfies the foregoing conditions.

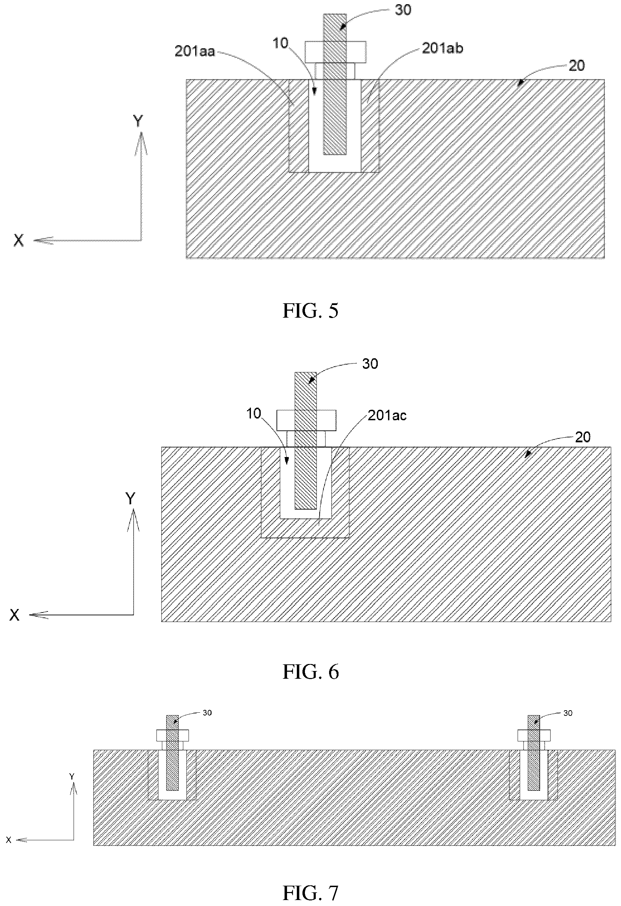

In some embodiments, referring to FIG. 5 and FIG. 6, when viewed along the thickness direction (that is, direction Z) of the current collector 10, the bottom of the first groove 201a is separated by the second groove 201b to form a discontinuous first zone 201aa and second zone 201ab, where the first zone and the second zone are arranged opposite each other. One end of the first insulation adhesive layer 40 is located in the first zone, and another end is located in the second zone. Alternatively, when viewed along the thickness direction of the current collector 10, the bottom of the first groove 201a is separated by the second groove 201b to form a third zone 201ac, where the third zone is U-shaped. In addition, as for a shape of the first groove 201a and the second groove 201b, a concave shape of the first groove 201a and the second groove 201b in some embodiments of this application includes but is not limited to rectangular, square, cylindrical, and conical shapes.

In some embodiments, as shown in FIG. 3, the second active substance layer 202 is provided with a third groove 202a and a fourth groove 202b running through the bottom of the third groove 202a to the current collector 10. The current collector 10 is partially exposed within the fourth groove 202b, and projections of the fourth groove 202b and the second groove 201b along the first direction overlap. The second insulation adhesive layer 50 is disposed on a side of the third groove 202a facing away from the current collector 10. The third groove 202a is used to accommodate the second insulation adhesive layer 50, so that the direct adhesion of the second insulation adhesive layer 50 to another surface of the electrode plate is reduced, so as to reduce its influence on the thickness of the electrode plate.

In some embodiments, the current collector 10 bends towards the fourth groove 202b to form a bending portion 10a. The bending portion 10a can be used for connecting the tab 30, and the bending portion 10a can reduce the influence of the tab 30 on the thickness direction of the electrode plate in direction Z.

In some embodiments, referring to FIG. 4, depth of the third groove 202a along the first direction is T4, thickness of the second insulation adhesive layer 50 along the first direction is T5, thickness of the second active substance layer 202 along the first direction is T6, where T5 ≤ T4 < T6. With such arrangement, the second insulation adhesive layer 50 does not extend beyond an edge of the opening of the third groove 202a along direction Z, reducing the protrusion of the second insulation adhesive layer 50 from the surface of the electrode plate, thereby reducing its influence on the thickness of the electrode plate. It should be noted that the specific values of T4, T5, and T6 in this embodiment are not specifically limited, and the specific values of T4, T5, and T6 can be set based on an actual need, as long as the relationship between T4, T5, and T6 satisfies the foregoing conditions.

In some embodiments, width of the fourth groove 202b along a second direction (that is, along direction X) is W4, width of the second insulation adhesive layer 50 along the second direction is W5, width of the third groove 202a along the second direction is W6, and W4 ≤ W5 ≤ W6. With such arrangement, during winding or stacking of the electrode plate, the second insulation adhesive layer 50 is located within the third groove 202a along direction X, reducing the protrusion of the second insulation adhesive layer 50 from the surface of the electrode plate, thereby reducing its influence on the thickness of the electrode plate. It should be noted that the specific values of W4, W5, and W6 in this embodiment are not specifically limited, and the specific values of W4, W5, and W6 can be set based on an actual need, as long as the relationship between W4, W5, and W6 satisfies the foregoing conditions. It can be understood that the quantities of the first grooves 201a and the third grooves 202a on the electrode plate are not specifically limited in some embodiments of this application and can be set based on the quantity of tabs 30 on the electrode plate. For example, as shown in FIG. 7, when the quantity of tabs 30 is 2, the quantity of first grooves 201a can be set to 2 accordingly.

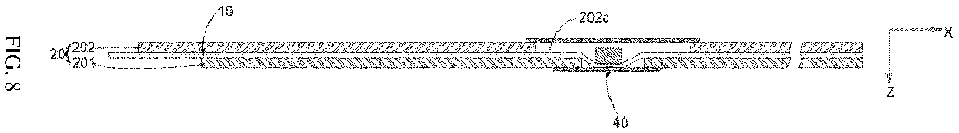

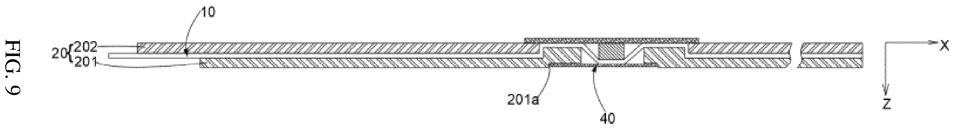

In addition, the specific formation process of the first groove 201a and the third groove 202a is not specifically limited in some embodiments of this application. The formation of the first groove 201a is used as an example, as shown in FIG. 8 and FIG. 9. The first insulation adhesive layer 40 is applied on the first active substance layer 201, and the second active substance layer 202 is provided with an accommodating groove 202c. Subsequently, the electrode plate is subjected to processes such as pressing. After the processes such as pressing, a part of the current collector 10 and the first active substance layer 201 that overlap with the accommodating groove 202c in projection in direction Z are accommodated within the accommodating groove 202c, and the first insulation adhesive layer 40 moves toward a direction of the accommodating groove 202c, forming a recess on the first active substance layer 201 to create the first groove 201a. The first insulation adhesive layer 40 is located within the first groove 201a. For the formation process of the third groove 202a, reference may be made to the formation process of the first groove 201a. It should be noted that in order for the first insulation adhesive layer 40 to move as a whole towards the accommodating groove 202c, the width of the accommodating groove 202c along direction X needs to be greater than or equal to the width of the first insulation adhesive layer 40 along direction X, and a projection of the first insulation adhesive layer in direction Z is located within the accommodating groove 202c.

For the first insulation adhesive layer 40 and the second insulation adhesive layer 50, as shown in FIG. 3, the first insulation adhesive layer 40 is disposed on a side of the first groove 201a facing away from the current collector 10, and the second insulation adhesive layer 50 is disposed on a side of the third groove 202a facing away from the current collector 10. The first insulation adhesive layer 40 is partially adhered to the tab 30, and the second insulation adhesive layer 50 is partially adhered to the current collector 10. Projections of the second insulation adhesive layer 50 and the first insulation adhesive layer 40 at least partially overlap along the thickness direction of the current collector 10, and the second insulation adhesive layer 50 and the first insulation adhesive layer 40 can prevent welding burrs on the tab 30 from puncturing the separator of the battery cell. Optionally, a material for producing the first insulation adhesive layer 40 and the second insulation adhesive layer 50 include at least one of polypropylene, polycarbonate, polyester resin, or polyamide.

In some embodiments of this application, a current collector 10, an active substance layer 20, a tab 30, and a first insulation adhesive layer 40 are provided. The active substance layer 20 is disposed on the surface of the current collector 10 and is provided with a first groove 201a and a second groove 201b running through the bottom of the first groove 201a to the current collector 10. The current collector 10 is partially exposed within the second groove 201b. The tab 30 is accommodated in the first groove 201a and the second groove 201b, where the tab 30 is connected to the current collector 10. In addition, the first insulation adhesive layer 40 is disposed on a side of the first groove 201a facing away from the current collector 10. The projections of the first insulation adhesive layer 40 and the tab 30 along the thickness direction of the current collector 10 are located within the first groove 201a of the active substance layer 20. With such arrangement, the first insulation adhesive layer 40 is adhered to the tab 30, which can prevent welding burrs on the tab 30 from puncturing the separator of the battery cell. In addition, the first insulation adhesive layer 40 is disposed within the first groove 201a. The first groove 201a is used to accommodate the first insulation adhesive layer 40, so that the direct adhesion of the first insulation adhesive layer 40 to the surface of the electrode plate is reduced, so as to reduce its influence on the overall thickness of the electrode plate. Further, this reduces the influence of the first insulation adhesive layer 40 on the thickness of the battery cell formed by winding or stacking the positive and negative electrode plates, improves the energy density of the battery cell, and enhances the thickness consistency of the battery cell, as well as the fast charging and cycling performance of the battery cell.

In addition, in some embodiments, referring to FIG. 3, there is a non-overlapping portion between projections of the second groove 201b and the fourth groove 202b in the first direction. With such arrangement, during processes such as pressing on the electrode plate, the non-overlapping portion between the second groove 201b and the fourth groove 202b in the first direction provides some displacement space for the active substance layer 20, reducing the influence of the active substance layer 20 on the thickness of the battery cell.

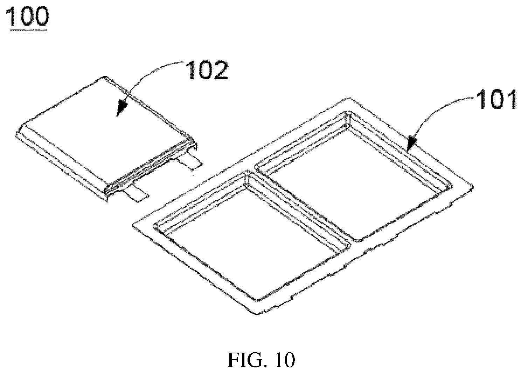

This application further provides some embodiments of an electrochemical apparatus 100. As shown in FIG. 10, the electrochemical apparatus 100 includes a housing 101 and an electrode assembly 102 located inside the housing 101. The electrode assembly 102 includes a separator 1021 and a first electrode plate 1022 and a second electrode plate 1023 disposed on two sides of the separator 1021 and having opposite polarities. The first electrode plate 1022 is the electrode plate described in the foregoing embodiments. The electrode assembly 102 can be formed by winding or stacking the separator 1021 with the first electrode plate 1022 and the second electrode plate 1023. In addition, it should be noted that polarities of the first electrode plate 1022 and the second electrode plate 1023 are not specifically limited. The first electrode plate 1022 or the second electrode plate 1023 can be a positive electrode plate, and the first electrode plate 1022 or the second electrode plate 1023 can be a negative electrode plate, as long as the first electrode plate 1022 and the second electrode plate 1023 have opposite polarities.

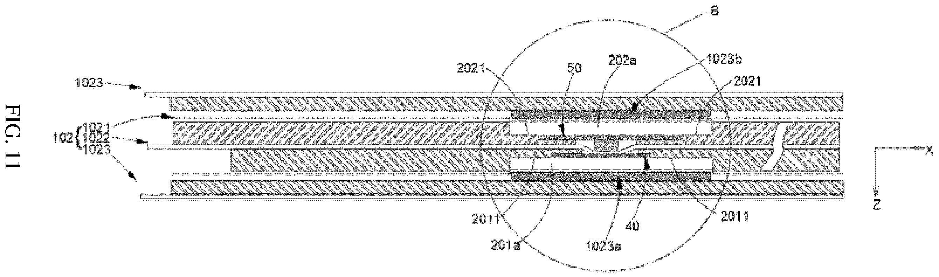

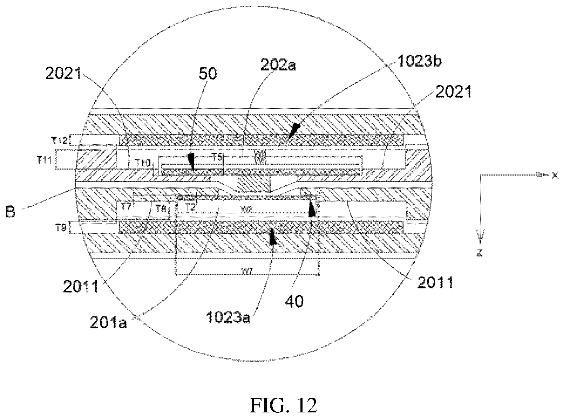

In some embodiments, referring to FIG. 11 and FIG. 12, the second electrode plate 1023 is provided with a third insulation adhesive layer 1023a, where the third insulation adhesive layer 1023a is disposed on a side of the active substance layer of the second electrode plate 1023 facing away from the current collector 10. The first electrode plate 1022 has two extended first step portions 2011 within the first groove 201a, where the two first step portions 2011 are spaced apart. The first insulation adhesive layer 40 is located between the two first step portions 2011, and the first step portions 2011 are each provided with a first step surface (not shown). In order to reduce the influence of the third insulation adhesive layer 1023a on the thickness of the battery cell, during the winding or stacking of the first electrode plate 1022 and the second electrode plate 1023, a side of the third insulation adhesive layer 1023a facing away from the active substance layer abuts against the separator 1021 until the separator 1021 abuts against the first step surface, and the third insulation adhesive layer 1023a is at least partially located within the first groove 201a, thereby reducing the influence of the third insulation adhesive layer 1023a on the thickness of the battery cell.

In some embodiments, thickness of the first step portions 2011 in the first direction is T7, thickness of the first insulation adhesive layer 40 in the first direction is T2, and T2 ≤ T7. With such arrangement, the thickness of the first insulation adhesive layer 40 in the first direction does not extend beyond the thickness of the first step portions 2011, so that during the winding or stacking of the first electrode plate 1022 and the second electrode plate 1023, direct contact between the first insulation adhesive layer 40 and the third insulation adhesive layer 1023a is reduced, reducing the risk of the first insulation adhesive layer 40 pushing the third insulation adhesive layer 1023a out of the first groove 201a, and further reducing the influence of the third insulation adhesive layer 1023a on the thickness of the battery cell.

In some embodiments, a distance from the first step surface to the opening of the first groove 201a is T8, thickness of the third insulation adhesive layer 1023a in the first direction is T9, and T9 ≤ T8. With such arrangement, during the winding or stacking of the first electrode plate 1022 and the second electrode plate 1023, the third insulation adhesive layer 1023a is accommodated within the first groove 201a, reducing the risk of the third insulation adhesive layer 1023a protruding from the surface of the first electrode plate 1022, reducing the influence of the third insulation adhesive layer 1023a on the thickness of the battery cell, improving the energy density of the battery cell, and enhancing the thickness consistency of the battery cell.

In some embodiments, a spacing between the two first step portions 2011 is W7, the width of the first insulation adhesive layer 40 in a second direction is W2, and W2 ≤ W7. With such arrangement, the first insulation adhesive layer 40 can be accommodated between the two first step portions 2011.

In some embodiments, the second electrode plate 1023 is provided with a fourth insulation adhesive layer 1023b, where the fourth insulation adhesive layer 1023b is disposed on a side of the active substance layer of the second electrode plate 1023 facing away from the current collector 10. The first electrode plate 1022 has two extended second step portions 2021 within the third groove 202a, where the two second step portions 2021 are spaced apart. The second insulation adhesive layer 50 is located between the two second step portions 2021, and the second step portions 2021 are each provided with a second step surface (not shown). During the winding or stacking of the first electrode plate 1022 and the second electrode plate 1023, a side of the fourth insulation adhesive layer 1023b facing away from the second electrode plate 1023 abuts against the separator 1021 until the separator 1021 abuts against the second step surface, and the fourth insulation adhesive layer 1023b is at least partially located within the third groove 202a, reducing the influence of the fourth insulation adhesive layer 1023b on the thickness of the battery cell.

In some embodiments, thickness of the second step portions 2021 in the first direction is T10, thickness of the second insulation adhesive layer 50 in the first direction is T5, and T5 ≤ T10. During the winding or stacking of the first electrode plate 1022 and the second electrode plate 1023, direct contact between the second insulation adhesive layer 50 and the fourth insulation adhesive layer 1023b is reduced, reducing the risk of the first insulation adhesive layer 40 pushing the third insulation adhesive layer 1023a out of the third groove 202a, and further reducing the influence of the fourth insulation adhesive layer 1023b on the thickness of the battery cell.

In some embodiments, a distance from the second step surface to the opening of the third groove 202a is T11, thickness of the fourth insulation adhesive layer 1023b in the first direction is T12, and T12 ≤ T11. With such arrangement, during the winding or stacking of the first electrode plate 1022 and the second electrode plate 1023, the fourth insulation adhesive layer 1023b is accommodated within the third groove 202a, reducing the risk of the fourth insulation adhesive layer 1023b protruding from the surface of the first electrode plate 1022, reducing the influence of the fourth insulation adhesive layer 1023b on the thickness of the battery cell, improving the energy density of the battery cell, and enhancing the thickness consistency of the battery cell.

In some embodiments, a spacing between the two second step portions 2021 is W8, width of the second insulation adhesive layer 50 in a second direction is W5, and W5 ≤ W8. With such arrangement, the second insulation adhesive layer 50 can be accommodated between the two second step portions 2021.

This application further provides some embodiments of an electronic device, where the electronic device includes the foregoing electrochemical apparatus. For the function and structure of the electrochemical apparatus, reference may be made to the foregoing embodiments and details are not repeated herein.

The foregoing descriptions are merely some embodiments of this application, but are not intended to limit the patent scope of this application. Any equivalent structural or process transformation made by using the content of the specification and accompanying drawings of this application, or direct or indirect application in other related technical fields shall all fall within the patent protection scope of this application in the same way.

## Claims

1. An electrode plate comprising a current collector and an active substance layer, wherein the active substance layer is disposed on surface of the current collector, wherein
the current collector comprises a first surface and a second surface arranged opposite each other, the active substance layer is disposed on the first surface, and the active substance layer is provided with a first groove and a second groove, wherein the first surface is partially exposed within the second groove, and along a first direction, a projection of the second groove is located within a projection of the first groove, and the first groove and the second groove are sequentially arranged along the first direction;
the current collector is provided with a tab and a first insulation adhesive layer, wherein the tab is accommodated in the first groove and the second groove, and the tab is connected to the current collector; and
the first insulation adhesive layer is disposed within the first groove, and projections of the first insulation adhesive layer and the tab along the first direction are located within the first groove, wherein the first direction is a thickness direction of the electrode plate.

2. The electrode plate according to claim 1, wherein
the active substance layer comprises a first active substance layer and a second active substance layer, wherein the first active substance layer is disposed on the first surface, the second active substance layer is disposed on the second surface, and the first groove is located on the first active substance layer.

3. The electrode plate according to claim 2, wherein
depth of the first groove along the first direction is T1, thickness of the first insulation adhesive layer along the first direction is T2, thickness of the first active substance layer along the first direction is T3, and T2 ≤ T1 < T3.

4. The electrode plate according to claim 3, wherein
the electrode plate satisfies at least one of the following conditions:
width of the second groove along a second direction is W1, width of the first insulation adhesive layer along the second direction is W2, and W1 ≤ W2; or
width of the first groove along the second direction is W3, W2 ≤ W3, and the second direction is perpendicular to the first direction.

5. The electrode plate according to claim 3, wherein
when viewed along the first direction, the bottom of the first groove is separated by the second groove to form a discontinuous first zone and second zone, wherein the first zone and the second zone are disposed opposite each other, one end of the first insulation adhesive layer is located in the first zone, and another end is located in the second zone;
or
when viewed along the first direction, the bottom of the first groove is separated by the second groove to form a third zone, wherein the third zone is U-shaped.

6. The electrode plate according to claim 3, wherein
the second active substance layer is provided with a third groove and a fourth groove running through the bottom of the third groove to the current collector, wherein the current collector is partially exposed within the fourth groove, projections of the fourth groove and the second groove along the first direction overlap, and the current collector bends towards the fourth groove to form a bending portion, wherein the tab is connected to the bending portion; and
the electrode plate further comprises a second insulation adhesive layer, wherein the second insulation adhesive layer is disposed on a side within the third groove and facing away from the current collector.

7. The electrode plate according to claim 6, wherein
depth of the third groove along the first direction is T4, thickness of the second insulation adhesive layer along the first direction is T5, thickness of the second active substance layer along the first direction is T6, and T5 ≤ T4 < T6.

8. The electrode plate according to claim 6, wherein
at least one of the following conditions is satisfied:
width of the fourth groove along a second direction is W4, width of the second insulation adhesive layer along the second direction is W5, and W4 ≤ W5; or
width of the third groove along the second direction is W6, W5 ≤ W6, and the second direction is perpendicular to the first direction.

9. The electrode plate according to any one of claims 6 to 8, wherein there is a non-overlapping portion between the projections of the second groove and the fourth groove along the first direction.

10. An electrochemical apparatus comprising a separator and a first electrode plate and a second electrode plate disposed on two sides of the separator and having opposite polarities, wherein the first electrode plate is the electrode plate according to any one of claims 1 to 5.

11. An electrochemical apparatus comprising a separator and a first electrode plate and a second electrode plate disposed on two sides of the separator and having opposite polarities, wherein the first electrode plate is the electrode plate according to any one of claims 6 to 8.

12. The electrochemical apparatus according to claim 11, wherein
the second electrode plate is provided with a third insulation adhesive layer, wherein the third insulation adhesive layer is disposed on a side of the active substance layer of the second electrode plate facing away from the current collector; and
the first electrode plate has two extended first step portions within the first groove, wherein the two first step portions are spaced apart, the first insulation adhesive layer is located between the two first step portions, and the first step portion is provided with a first step surface, wherein during the winding or stacking of the first electrode plate and the second electrode plate, a side of the third insulation adhesive layer facing away from the active substance layer abuts against the separator until the separator abuts against the first step surface, and the third insulation adhesive layer is at least partially located within the first groove.

13. The electrochemical apparatus according to claim 12, wherein
at least one of the following conditions is satisfied:
thickness of the first step portion along the first direction is T7, thickness of the first insulation adhesive layer along the first direction is T2, and T2 ≤ T7;
a distance from the first step surface to an opening of the first groove is T8, thickness of the third insulation adhesive layer along the first direction is T9, and T9 ≤ T8; or
a distance between the two first step portions is W7, width of the first insulation adhesive layer along the second direction is W2, and W2 ≤ W7.

14. The electrochemical apparatus according to claim 11, wherein
the second electrode plate is provided with a fourth insulation adhesive layer, wherein the fourth insulation adhesive layer is disposed on a side of the active substance layer of the second electrode plate facing away from the current collector; and
the first electrode plate has two extended second step portions within the third groove, wherein the two second step portions are spaced apart, the second insulation adhesive layer is located between the two second step portions, and the second step portion is provided with a second step surface, wherein during the winding or stacking of the first electrode plate and the second electrode plate, a side of the fourth insulation adhesive layer facing away from the active substance layer on the second electrode plate abuts against the separator until the separator abuts against the second step surface, and the fourth insulation adhesive layer is at least partially located within the third groove.

15. The electrochemical apparatus according to claim 14, wherein
at least one of the following conditions is satisfied:
thickness of the second step portion along the first direction is T10, thickness of the second insulation adhesive layer along the first direction is T5, and T5 ≤ T10;
a distance from the second step surface to an opening of the third groove is T11, thickness of the fourth insulation adhesive layer along the first direction is T12, and T12 ≤ T11; or
a distance between the two second step portions is W8, width of the second insulation adhesive layer along the second direction is W5, and W5 ≤ W8.

16. An electronic device, comprising the electrochemical apparatus according to any one of claims 10 to 15.
